# EUROPÄISCHE PATENTSCHRIFT

(11) **EP 3 439 910 B1**
(45) Veröffentlichungstag und Bekanntmachung des Hinweises auf die Patenterteilung: **10.06.2020**
(21) Anmeldenummer: 17715462.2
(22) Anmeldetag: 04.04.2017
(51) Int. Cl.: B60N 2/36, B60N 2/20

(54) **BETÄTIGUNGSVORRICHTUNG ZUR LEHNENENTRIEGELUNG MIT ZWEI BETÄTIGUNGSELEMENTEN UND EINEM INDIKATOR ZUR ANZEIGE DER LEHNENVERRIEGELUNG**
ACTUATION DEVICE FOR UNLOCKING A BACKREST, COMPRISING TWO ACTUATION ELEMENTS AND AN INDICATOR FOR DISPLAYING THE BACKREST LOCK
MÉCANISME D'ACTIONNEMENT POUR DÉVERROUILLER UN DOSSIER, DOTÉ DE DEUX ÉLÉMENTS D'ACTIONNEMENT ET D'UN INDICATEUR POUR AFFICHER LE VERROUILLAGE DU DOSSIER

(30) Priorität: 04.04.2016 DE 102016205485
(43) Veröffentlichungstag der Anmeldung: 13.02.2019
(73) Patentinhaber: Volkswagen Aktiengesellschaft, 38440 Wolfsburg (DE)
(72) Erfinder: PASTERNAK, Lukasz, 38527 Meine (DE)
(86) Internationale Anmeldenummer: PCT/EP2017/057910
(87) Internationale Veröffentlichungsnummer: WO 2017/174538

(56) Entgegenhaltungen:
- WO-A1-2012/104093
- DE-C1- 4 314 443
- JP-A- H08 119 010
- US-A1- 2012 175 927

## Beschreibung

Die Erfindung betrifft eine Betätigungsvorrichtung zur Entriegelung einer verriegelten Entriegelungs- und/oder Verstellmechanik eines Fahrzeugsitzes mit einem ersten und einem zweiten Betätigungselement.

Aus den Druckschriften DE 10 2012 012 657 A1, DE 10 2011 116 709 A1 und DE 10 2007 058 332 A1 sind Betätigungsvorrichtungen zur Entriegelung einer verriegelten Entriegelungs- und/oder Verstellmechanik eines Fahrzeugsitzes mit mindestens einem Betätigungselement bekannt. Diese Betätigungsvorrichtungen umfassen keine Anzeige zur Indikation eines Betätigungszustandes der Betätigungsvorrichtung, so dass für den Anwender keine Anzeige über den Verriegelungszustand der verriegelten Entriegelungs- und/oder Verstellmechanik des Fahrzeugsitzes erfolgen kann.

Lösungen zur Indikation des Verriegelungszustandes des Rückenlehnenteiles des Fahrzeugsitzes gegenüber dem Sitzteil des Fahrzeugsitzes sind aus dem Stand der Technik entnehmbar.

Aus der Druckschrift DE 10 2011 018 330 A1 ist eine Betätigungseinheit für einen Fahrzeugsitz bekannt, aufweisend einen Griff zur gemeinsamen Betätigung zweier Verriegelungen, eine Kraftübertragung zwischen Griff und jeder Verriegelung, einen ersten Indikator, welcher der ersten Kraftübertragung zugeordnet ist, einen zweiten Indikator, welcher der zweiten Kraftübertragung zugeordnet ist, wobei die beiden Indikatoren jeweils den Verriegelungszustand der zugeordneten Verriegelung anzeigen, und die beiden Indikatoren mit einer logischen OR-Funktion einen Gesamtindikator ansteuern, um sichtbar den entriegelten Zustand anzuzeigen.

Ferner offenbart die Druckschrift DE 10 2013 221 540 A1 eine Verriegelungsanzeige für einen Fahrzeugsitz mit mehreren Verriegelungselementen aufweisend eine Anzeigeöffnung mit einer darin sichtbaren Statusanzeige. Es ist vorgesehen, dass für jedes Verriegelungselement jeweils eine Statusanzeige mit einem Anzeigeteil für die Nichtverriegelung des Verriegelungselements vorgesehen ist, und dass zumindest ein Teil des Anzeigeteils bei nicht verriegeltem Verriegelungselement sichtbar im Bereich der Anzeigeöffnung angeordnet ist, wobei die Anzeigeteile nicht verriegelter Verriegelungselemente sich zumindest teilweise überdecken. Aus der WO 2012/104093 A1 ist ein Betätigungselement mit einer Verriegelungsanzeige bekannt, wobei Betätigungselement und Verriegelungsanzeige in einem gemeinsamen Gehäuse untergebracht sind.

Der Erfindung liegt, ausgehend von dem genannten Stand der Technik, die Aufgabe zugrunde, eine Lösung für eine Betätigungsvorrichtung zur Entriegelung einer verriegelten Entriegelungs- und/oder Verstellmechanik eines Fahrzeugsitzes und einer Hintersitzanlage, insbesondere einer Lehnenentriegelung zu schaffen, die eine Entriegelung des Rückenlehnenteiles gegenüber einem Sitzteil in einer im Wesentlichen vertikalen Ausgangsposition des Rückenlehnenteiles und in einer auf das Sitzteil geklappten im Wesentlichen waagerechten Klappposition (Cargo-Position) des Rückenlehnenteiles erlaubt, wobei ein neues komfortables, insbesondere anwenderfreundliches und sicheres Betätigungskonzept gesucht wird, welches sich formschön in den Korpus in einer Rückenlehne einfügt. Hinsichtlich der Sicherheit soll die zu schaffende Betätigungsvorrichtung in der Lage sein, einen verriegelten Zustand des Rückenlehnenteiles gegenüber dem Sitzteil beziehungsweise einen unverriegelten Zustand des Rückenlehnenteiles gegenüber dem Sitzteil zu erkennen und zu signalisieren. Diese Aufgabe ergibt sich beispielsweise daraus, dass bekannte Fahrzeugsitze derart ausgebildet sind, dass das Rückenlehnenteil in Positionen gebracht werden kann, bei denen das Rückenlehnenteil gegenüber dem Sitzteil unverriegelt ist. Diese Positionen sollen dem Anwender gemäß der Aufgabe der Erfindung signalisiert werden, so dass sich der Anwender bei einem unverriegelten Zustand des Rückenlehnenteiles gegenüber dem Sitzteil aufgefordert fühlt, das Rückenlehnenteil gegenüber dem Sitzteil zu verriegeln.

Ausgangspunkt der Erfindung ist eine Betätigungsvorrichtung zur Entriegelung einer verriegelten Entriegelungs- und/oder Verstellmechanik eines Fahrzeugsitzes mit einem ersten und einem zweiten Betätigungselement.

Erfindungsgemäß ist vorgesehen, dass das erste und zweite Betätigungselement sowie ein Indikatorelement gemeinsam in einem Gehäuse der Betätigungsvorrichtung angeordnet sind, wobei die Betätigungselemente mit mindestens einer Betätigungsmechanik in Verbindung stehen, die bei Betätigung eines der Betätigungselemente stets für eine Entriegelung der verriegelten Entriegelungs- und/oder Verstellmechanik sorgt, wobei die Betätigung eines der Betätigungselemente gleichzeitig zu einer Betätigung und Anzeige des Indikatorelementes über den entriegelten oder verriegelten Zustand der Entriegelungs- und/oder Verstellmechanik führt.

Die Betätigungsvorrichtung hat gegenüber der Druckschrift DE 10 2011 018 330 A1 den Vorteil, dass ein einziges Indikatorelement ausreicht, um den entriegelten oder verriegelten Zustand der Entriegelungs- und/oder Verstellmechanik anzuzeigen, wobei die Anzeige unabhängig davon erfolgt, ob das erste oder zweite Betätigungselement betätigt worden ist.

Die Betätigungsvorrichtung hat gegenüber der Druckschrift DE 10 2013 221 540 A1 den Vorteil, dass nicht für jedes Verriegelungselement einer entriegelten oder verriegelten Entriegelungs- und/oder Verstellmechanik jeweils eine Statusanzeige ausgebildet ist. Das Indikatorelement erfasst nämlich in vorteilhafter Weise alle Verriegelungselemente der Entriegelungs- und/oder Verstellmechanik, die mittels der Betätigung über das erste oder zweite Betätigungselement aus dem verriegelten in den entriegelten Zustand gebracht werden, wie im Beschreibungsteil noch näher erläutert ist.

In bevorzugter Ausgestaltung der Erfindung ist vorgesehen, dass unabhängig voneinander eine Betätigung des ersten Betätigungselementes oder eine Betätigung des zweiten Betätigungselementes über die mindestens eine Betätigungsmechanik für die Entriegelung der verriegelten Entriegelungs- und/oder Verstellmechanik sorgt. Mit anderen Worten, die Betätigungsvorrichtung erlaubt eine von der Betätigung des ersten oder zweiten Betätigungselementes unabhängige Betätigung ein und derselben Betätigungsmechanik, über die eine Entriegelung der Entriegelungs- und/oder Verstellmechanik möglich ist. Dabei ist in vorteilhafter Weise das Indikatorelement in die Betätigungsvorrichtung integriert und mit der Betätigungsmechanik derart verbunden, dass auch das Indikatorelement unabhängig von der Betätigung des ersten oder zweiten Betätigungselementes stets eine Anzeige über den entriegelten oder verriegelten Zustand der Entriegelungs- und/oder Verstellmechanik ermöglicht.

In bevorzugter Ausgestaltung der Erfindung ist vorgesehen, dass das erste Betätigungselement gemeinsam mit einem mit ihm wirkverbundenen Hebel auf einer Achse drehbar gelagert ist, und das erste Betätigungselement auf einer durch die Achse ausgebildeten Schwenkachse von einer Ausgangsposition in eine Betätigungsendposition schwenkbar ist, wodurch die mindestens eine Betätigungsmechanik bei einer Betätigung des ersten Betätigungselementes von einer unbetätigten Ausgangsposition in eine Betätigungsendposition für die Entriegelung der verriegelten Entriegelungs- und/oder Verstellmechanik eines Fahrzeugsitzes sorgt, und gleichzeitig das Indikatorelement von seiner unbetätigten Position in seine betätigte Position überführt.

In vorteilhafter Weise ist das erste Betätigungselement mit einem ein zentrales Element darstellenden Hebel wirkverbunden. Erstes Betätigungselement und Hebel sind gemeinsam auf einer Achse drehbar gelagert. Diese Anordnung ist kompakt und einfach ausführbar, wobei in vorteilhafter Weise auch das zweite Betätigungselement mit dem Hebel in Wirkverbindung gebracht wird. Dadurch, dass das erste Betätigungselement und das zweite Betätigungselement beide mit dem Hebel in Wirkverbindung stehen, besteht die Möglichkeit die gewünschten Funktionen zur Betätigung der Betätigungsmechanik und zur Betätigung des Indikatorelementes an die Bewegung, insbesondere an die Schwenkbewegung des Hebels um die Schwenkachse zu koppeln.

Analog zu dem ersten Betätigungselement ist somit vorgesehen, dass auch das zweite Betätigungselement mit dem Hebel in Wirkverbindung steht, der auf der durch die Achse ausgebildeten Schwenkachse schwenkbar gelagert ist, wobei auch das zweite Betätigungselement von einer Ausgangsposition in eine Betätigungsendposition bewegbar ist, wodurch die mindestens eine Betätigungsmechanik bei einer Betätigung des zweiten Betätigungselementes von einer unbetätigten Ausgangsposition in eine Betätigungsendposition für die Entriegelung der verriegelten Entriegelungs- und/oder Verstellmechanik eines Fahrzeugsitzes sorgt und gleichzeitig das Indikatorelement von seiner unbetätigten Position in seine betätigte Position überführt.

Erfindungsgemäß ist vorgesehen, dass der mit dem ersten und zweiten in Wirkverbindung stehende Hebel über mindestens einen Bowdenzugmitnehmer verfügt, wobei der Hebel bei der Betätigung eines der Betätigungselemente von der Ausgangsposition in die Betätigungsendposition den Bowdenzugmitnehmer verlagert, der mit einem Ende des mindestens eines Bowdenzuges in Verbindung steht, und der mit seinem anderen Ende mit der Entriegelungs- und/oder Verstellmechanik eines Fahrzeugsitzes verbunden ist. In vorteilhafter Weise ist der mindestens eine Bowdenzugmitnehmer in den Hebel selbst integriert. Frühere Lösungen offenbaren separate Bowdenzugmitnehmer, die bei einer Bewegung des Hebels von dem Hebel mitgenommen werden. Insofern stellt diese Lösung eine kompakte und einfachere Lösung dar.

Bevorzugt steht das Indikatorelement dabei mit einem Indikatorelement-Hebel in Wirkverbindung. Der Indikatorelement-Hebel ist drehbar auf der Achse angeordnet und drehfest mit dem auf der Achse um die erste Schwenkachse drehbaren Hebel verbunden. Auch hier wird deutlich, dass in vorteilhafter Weise vom Erfinder erkannt worden ist, dass eine Anbindung des Indikatorelement-Hebels an den die Bowdenzugmitnehmer aufweisenden Hebel von Vorteil ist, um die Schwenkbewegung des Hebels eins zu eins auf den Indikatorelement-Hebel zu übertragen.

Bevorzugt ist, dass der Indikatorelement-Hebel eine Hebelarmscheibe aufweist, die ein Lagerelement ausbildet, welches ein erstes Lagerteil und ein zweites Lagerteil umfasst, wobei das erste Lagerteil drehfest an dem Hebel und das zweite Lagerteil drehbar in dem Gehäuse der Betätigungsvorrichtung in jeweils dafür vorgesehenen Lagerstellen gelagert ist. Durch diese Ausgestaltung ist der Indikatorelement-Hebel in einfacher Weise dafür vorbereitet, dass er ein Federelement tragen kann und, dass er gleichzeitig einfach im Gehäuse der Betätigungsvorrichtung gelagert werden kann.

Bevorzugt trägt die Hebelarmscheibe nämlich ein Indikatorelement-Federelement, welches ein erstes Ende und ein zweites Ende aufweist, wobei sich das erste Ende im Indikatorelement und das zweite Ende am Gehäuse der Betätigungsvorrichtung abstützt. Die Anordnung eines Federelementes zum Aufbau einer Verbindung zwischen Indikatorelement und Indikatorelement-Hebel über die Hebelarmscheibe stellt eine einfache Lösung dar, da die Enden des Indikator-Federelementes in dafür geeigneten Positionen einmal am Indikatorelement und ein anderes Mal am Gehäuse der Betätigungsvorrichtung abgestützt werden können.

In vorteilhafter Weise weist der Hebelarm des Indikatorelement-Hebels an der Hebelarmscheibe ein offenes Ende auf, welches an einer Kontur des Indikatorelementes anliegt, wobei die Kontur als Steg ausgebildet ist, der eine konturierte Anlagefläche ausbildet, an der das offene Ende des Hebelarms anliegt, wobei die Anlagefläche einen ersten Konturbereich und einen zweiten Konturbereich ausbildet. Durch diese Lösung bewirkt der Indikatorelement-Hebel eine Führung des Indikatorelementes bei der translatorischen Bewegung des Indikatorelementes innerhalb des Gehäuses von der unbetätigten Position des Indikatorelementes in die betätigte Position des Indikatorelementes und umgekehrt, wie im Beschreibungsteil näher erläutert ist.

Schließlich ist in vorteilhafter Weise im Detail bevorzugt vorgesehen, dass bei der Betätigung eines der Betätigungselemente von der Ausgangsposition in die Betätigungsendposition und einer einhergehenden Betätigung des Hebels der Hebelarm des Indikatorelement-Hebels verschwenkt, wodurch das erste Ende des vorgespannten Federelementes eine Kraft auf das Indikatorelement ausübt, wodurch eine vertikale translatorische Bewegung des Indikatorelementes innerhalb der Tasche bewirkt wird, wodurch das Indikatorelement von seiner unbetätigten eingefahrenen Position in die betätigte ausgefahrene Position kommt.

Das Indikatorelement weist eine bevorzugte Ausgestaltung auf, die dadurch gekennzeichnet ist, dass das Indikatorelement ein Indikatorelement-Oberteil und ein Indikatorelement-Unterteil aufweist, wobei das Indikatorelement-Oberteil und das Indikatorelement-Unterteil in der unbetätigten eingefahrenen Position unterhalb einer Oberseite des Gehäuses der Betätigungsvorrichtung angeordnet sind, und das Indikatorelement-Oberteil in einer Öffnung des Gehäuse von außen sichtbar einsteht, wobei in der betätigten ausgefahrenen Position das Indikatorelement-Oberteil die Öffnung vollständig und das Indikatorelement-Unterteil die Öffnung zumindest teilweise durchgreifen, so dass das Indikatorelement-Oberteil und das Indikatorelement-Unterteil aus dem Gehäuse herausstehen und von außen sichtbar sind. In vorteilhafter Weise ist es über die Ausgestaltung und Anordnung, der durch den Steg ausgebildeten Konturbereiche beziehungsweise der Anlageflächen der Konturbereiche möglich festzulegen, wie weit das Indikatorelement-Oberteil und das Indikatorelement-Unterteil über die Oberseite des Gehäuses herausstehen, wenn sich das Indikatorelement in der betätigten ausgefahrenen Position befindet. Analog dazu ist es möglich festzulegen, wie weit das Indikatorelement-Oberteil und das Indikatorelement-Unterteil in die Öffnung des Gehäuses einfahren, wenn sich das Indikatorelement in der unbetätigten eingefahrenen Position befindet.

Weitere erfindungsgemäße Vorteile und Effekte der erfindungsgemäßen Betätigungsvorrichtung sowie verschiedene Anwendungsfälle werden im Beschreibungsteil näher erläutert.

Für die Zwecke der vorliegenden Beschreibung soll mit "+x" ("plus x") die übliche Fahrtrichtung eines Fahrzeugs bezeichnet werden, mit "-x" ("minus x") die Richtung entgegen seiner üblichen Fahrtrichtung, mit "y" wird die Richtung in der Horizontalen quer zur x-Richtung bezeichnet, und mit "z" wird die Richtung in der Vertikalen quer zur x-Richtung bezeichnet. Diese Bezeichnungsweise der Raumrichtungen in kartesischen Koordinaten entspricht dem in der Kraftfahrzeugindustrie allgemein verwendeten Koordinatensystem.

Innerhalb aller Figuren werden nachfolgend die gleichen Bezugszeichen für gleiche Bauteile verwendet, wobei gegebenenfalls nicht in jeder Figur erneut alle bereits vorgestellten Bauteile anhand der Bezugszeichen nochmals erläutert werden.

Die Erfindung wird nachfolgend in einem Ausführungsbeispiel anhand der zugehörigen Zeichnungen erläutert. Es zeigen:
- Figur 1: eine Rückansicht auf einen Fahrzeugsitz mit einem Rückenlehnenteil mit zwei getrennt angeordneten Betätigungselementen zur Entriegelung von Beschlägen zwischen Rückenlehnenteil und Sitzteil nach dem Stand der Technik in einer ersten Ausführungsvariante;
- Figur 2: eine Rückansicht auf einen Fahrzeugsitz mit einem Rückenlehnenteil mit zwei getrennt angeordneten Betätigungselementen zur Entriegelung von Beschlägen zwischen Rückenlehnenteil und Sitzteil nach dem Stand der Technik in einer zweiten Ausführungsvariante;
- Figur 3: eine perspektivische Ansicht auf einen Fahrzeugsitz mit einer erfindungsgemäßen Betätigungsvorrichtung mit zwei in der Betätigungsvorrichtung zusammengefassten Betätigungselementen ebenfalls am Beispiel der Entriegelung von Beschlägen zwischen Rückenlehnenteil und Sitzteil;
- Figur 4A: eine perspektivische Außenansicht schräg von oben auf die Betätigungsvorrichtung in Ausgangsposition im Zusammenbauzustand;
- Figur 4B: eine perspektivische Innenansicht schräg von oben in die Betätigungsvorrichtung in Ausgangsposition im Zusammenbauzustand;
- Figur 4C: eine Innenansicht von oben in die Betätigungsvorrichtung unter Weglassung eines Griffoberteiles und eines Griffunterteiles in Ausgangsposition im Zusammenbauzustand;
- Figur 5A: einen Schnitt in einer x/z-Ebene durch die Betätigungsvorrichtung in Ausgangsposition (Ansicht von links);
- Figur 5B: einen Schnitt in der x/z-Ebene durch die Betätigungsvorrichtung in Betätigungsendposition des ersten Betätigungselementes (Ansicht von links);
- Figur 5C: einen Schnitt in der x/z-Ebene durch die Betätigungsvorrichtung in Betätigungsendposition des zweiten Betätigungselementes (Ansicht von links);
- Figur 6A: den Schnitt wie in Figur 5A;
- Figur 6B: einen Schnitt in einer x/z-Ebene durch die Betätigungsvorrichtung in Ausgangsposition (Ansicht von rechts);
- Figur 7A: den Schnitt wie in Figur 5B;
- Figur 7B: einen Schnitt in der x/z-Ebene durch die Betätigungsvorrichtung in Betätigungsendposition des ersten Betätigungselementes (Ansicht von rechts);
- Figur 8A: den Schnitt wie in Figur 5C;
- Figur 8B: einen Schnitt in der x/z-Ebene durch die Betätigungsvorrichtung in Betätigungsendposition des zweiten Betätigungselementes (Ansicht von rechts);
- Figur 9A: eine vergrößerte perspektivische Darstellung der Betätigungselemente der Betätigungsvorrichtung in Ausgangsposition (Ansicht von links);
- Figur 9B: eine noch weiter vergrößerte perspektivische Darstellung eines Hebels zur Verdeutlichung eines ersten Betätigungsvorganges bei Betätigung des transparent dargestellten ersten Betätigungselementes (Ansicht von links);
- Figur 10A: eine perspektivische Darstellung des Indikatorelementes und eines Indikatorhebels bei verriegelten Beschlägen der Lehnenentriegelung; und
- Figur 10B: eine andere perspektivische Darstellung des unteren Bereiches des Indikatorelementes und des Indikatorhebels bei verriegelten Beschlägen der Lehnenentriegelung.

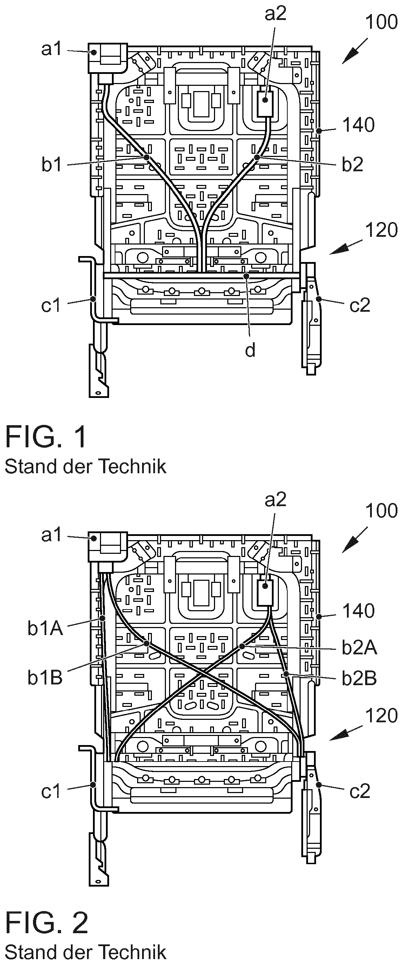

Zunächst werden anhand der Figuren 1 und 2 zwei bekannte Betätigungskonzepte zur Entriegelung eines Rückenlehnenteiles 140 gegenüber einem Sitzteil 120 eines Fahrzeugsitzes 100 erläutert.

Die Figuren 1 und 2 zeigen jeweils eine Ansicht von hinten auf den Fahrzeugsitz 100. An dem Rückenlehnenteil 140 des Fahrzeugsitzes 100 sind jeweils zwei Betätigungselemente angeordnet, die mit a1 und a2 gekennzeichnet sind.

Eine Betätigungsmechanik ausgebildet durch Bowdenzüge, die in Figur 1 mit b1, b2 und in Figur 2 mit b1A, b1B, b2A, b2B gekennzeichnet sind, überträgt eine Betätigungsbewegung getrennt angeordneter Betätigungselemente a1 und a2 auf die als Verstellmechanik zwischen Sitzteil und Rückenlehne beidseitig angeordneten Beschläge c1, c2.

Durch die Betätigung der Betätigungselemente a1, a2 kommt es zur Entriegelung der Beschläge c1, c2. In Figur 1 sind nur zwei Bowdenzüge b1, b2 angeordnet, da ein zur Betätigungsmechanik gehörendes Übertragungselement d, insbesondere eine Übertragungsstange, die Bewegung der Betätigungselemente a1 und a2 auf die beidseitig angeordneten Beschläge c1, c2 überträgt.

In Figur 2 ist ein solches Übertragungselement d nicht angeordnet, so dass zur Weiterleitung der Bewegung der Betätigungselemente a1 und a2 auf die beidseitig angeordneten Beschläge c1, c2 sogar vier Bowdenzüge b1A, b1B, b2A, b2B notwendig sind.

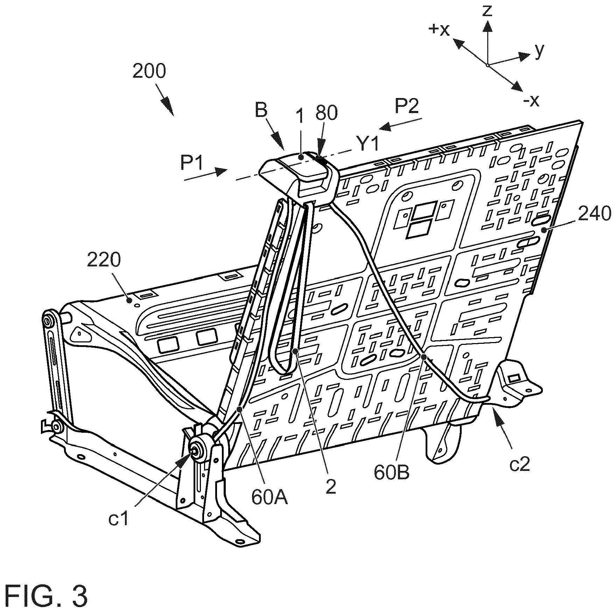

Die Figur 3 zeigt eine perspektivische Ansicht auf einen erfindungsgemäßen Fahrzeugsitz 200, insbesondere in einer Ausgestaltung als Hintersitzanlage mit einer Betätigungsvorrichtung B mit zwei in einer einzigen Betätigungsvorrichtung B zusammengefassten Betätigungselementen 1, 2 am Beispiel der Entriegelung von Beschlägen c1 und c2 zwischen einem Rückenlehnenteil 240 und einem Sitzteil 220 der Hintersitzanlage.

In Figur 3 ist die Betätigungsvorrichtung B im Einbauzustand an einem Rückenlehnenteil 240 eines Fahrzeugsitzes 200 dargestellt. Befindet sich der Fahrzeugsitz 200 in einem Fahrzeug in Normalposition, verläuft eine Schwenkachse Y1 der Betätigungsvorrichtung B quer zur Fahrtrichtung +/-x des Fahrzeuges.

Die Entriegelung zwischen dem Rückenlehnenteil 240 und dem Sitzteil 220 und deren Neigungsverstellung mit anschließender Verriegelung erfolgt beispielsweise über eine kombinierte Entriegelungs- und Verstellmechanik, insbesondere über die Beschläge c1 und c2, die Bestandteile der kombinierten Entriegelungs- und Verstellmechanik sind.

Es wird ausdrücklich darauf hingewiesen, dass die Betätigungsvorrichtung B auch zur Entriegelung einer Verriegelungsmechanik des Fahrzeugsitzes 200 insgesamt (zum Beispiel zur Entnahme des Sitzes) oder einer Verstellmechanik zur Sitzschienenentriegelung (zur Sitzlängsverstellung des Sitzes) dienen kann.

Die in Figur 3 dargestellten Bowdenzüge 60A, 60B können entsprechend dem jeweiligen Anwendungsfall auf Entriegelungselemente der Verriegelungsmechanik zwischen Fahrzeugsitz 200 und der karosserieseitigen Anbindung des Fahrzeugsitzes 200 (entriegelbarer Sitzfuß) oder auf die Verstellmechanik zwischen Fahrzeugsitz 200 und den karosserieseitigen Sitzschienen (entriegelbare Sitzschienenverriegelung) geführt werden.

Nachfolgend wird eine der oben ausgeführten Lösungen erläutert, bei der die Bowdenzüge 60A, 60B auf als Beschläge c1, c2 ausgebildete Entriegelungselemente der Verriegelungsmechanik zwischen Rückenlehnenteil 240 und Sitzteil 220 des Fahrzeugsitzes 200 geführt sind beziehungsweise auf die Beschläge c1, c2 entriegelnd einwirken.

Die Figur 3 legt für die weitere Beschreibung mit dem Blick des Betrachters - von hinten - auf den Fahrzeugsitz 200 die Ansichten Pfeil P1 von "links" beziehungsweise Pfeil P2 von "rechts" auf die Betätigungsvorrichtung B fest. Die Betätigungsvorrichtung B umfasst erfindungsgemäß ein Indikatorelement 80. Im dargestellten Ausführungsbeispiel ist das Indikatorelement 80 auf der rechten Seite der Betätigungsvorrichtung B angeordnet. Es versteht sich, dass generell auch eine Anordnung des Indikatorelementes 80 unter Anpassung des Aufbaus der Betätigungsvorrichtung B auf der linken Seite der Betätigungsvorrichtung B möglich ist.

Die Figur 3 zeigt beispielhaft einen 1/3 Teil einer Hintersitzbank. Es versteht sich, dass auch ein 2/3 Teil einer Hintersitzbank mit der Betätigungsvorrichtung B ausrüstbar ist.

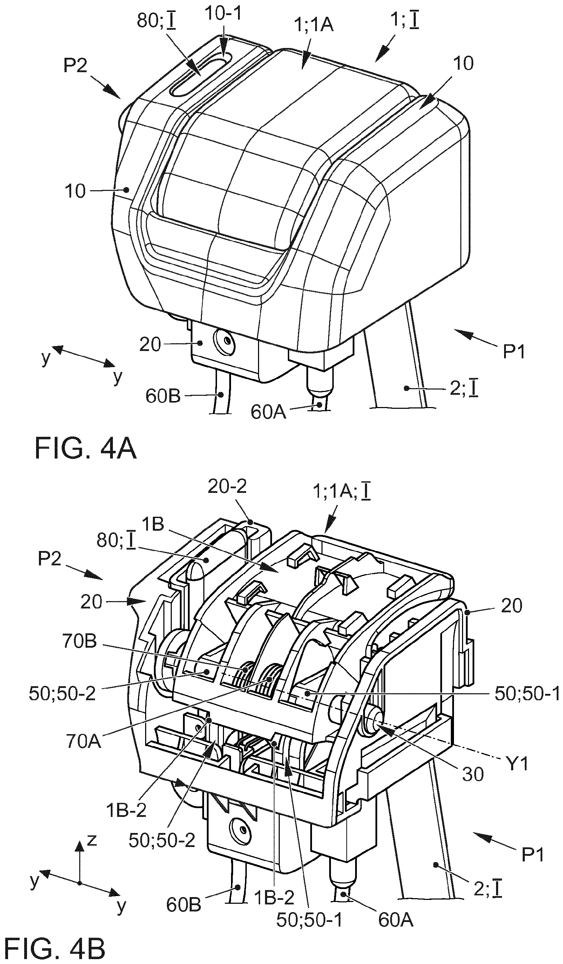

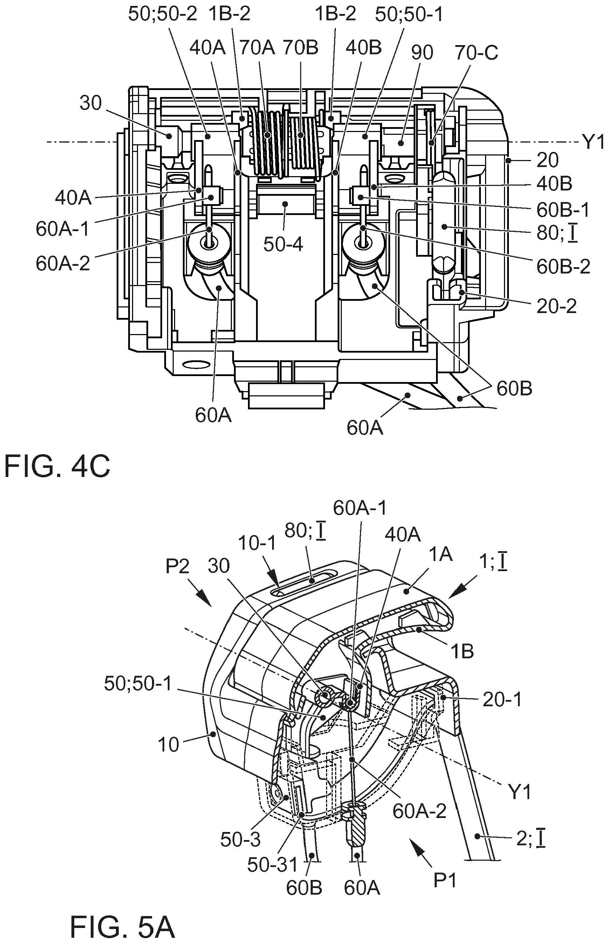

Die Figur 4A zeigt eine perspektivische Außenansicht der Betätigungsvorrichtung B im Zusammenbauzustand. Die Figur 4B zeigt eine perspektivische Innenansicht der Betätigungsvorrichtung B ebenfalls im Zusammenbauzustand. Die Figur 4C zeigt eine Innenansicht von oben in die Betätigungsvorrichtung B (unter Weglassung eines Griffoberteiles 1A und eines Griffunterteiles 1B eines Griffes 1) in Ausgangsposition im Zusammenbauzustand.

Die Figuren 4A, 4B und 4C werden nachfolgend in einer Zusammenschau erläutert.

Die Betätigungsvorrichtung B umfasst eine Blende 10 und ein erstes Betätigungselement 1, das als Griff 1 ausgebildet ist. Die Blende 10 wird auch als Kappe bezeichnet. Die Blende 10 umgibt ein im Einbauzustand der Betätigungsvorrichtung B ortsfestes Gehäuse 20, welches im Inneren der Blende 10 angeordnet ist. Die Blende 10 weist im Ausführungsbeispiel auf ihrer Oberseite eine Öffnung 10-1 auf, in der im Zusammenbauzustand der Betätigungsvorrichtung B das Indikatorelement 80 beziehungsweise ein oberer Bereich des Indikatorelementes 80 angeordnet ist. Auf den Aufbau, die Anordnung und die Funktion des Indikatorelementes 80 wird nachfolgend noch detailliert eingegangen.

In den Figuren 4A bis 4C ist bereits sichtbar, dass das Indikatorelement 80 in einer gehäuseseitigen Tasche 20-2 vertikal in z-Richtung beweglich angeordnet ist. Das Indikatorelement 80 befindet sich jeweils in einer unbetätigten eingefahrenen Position 80; I.

Der Griff 1 (in Figur 4C nicht dargestellt) befindet sich in den Figuren 4A und 4B ebenfalls in einer unbetätigten Ausgangsposition 1, I. In dieser Ausgangsposition 1; I des Griffes 1 sitzt das Indikatorelement 80 in der Blende 10, das heißt in einer unbetätigten eingefahrenen Position 80; I. Als unbetätigte, eingefahrene Position 80; I des Indikatorelementes 80 wird eine Position angesehen, bei der die Oberseite des Indikatorelementes 80 nicht über die Oberseite der Blende 10 heraussteht.

Dadurch ist ausschließlich die Oberseite des Indikatorelementes 80 sichtbar, die nicht mit einer Signalfarbe versehen ist, da die Beschläge c1, c2 in der eingefahrenen Position 80, I des Indikatorelementes 80 sicher verriegelt sind, so dass für den Anwender eine warnende Signalisierung hinsichtlich eines unverriegelten Zustandes nicht notwendig ist.

Der Griff 1 weist ein Griffoberteil 1A (Fig. 4A) und ein Griffunterteil 1B (Fig. 4B) auf, die im Zusammenbauzustand fest miteinander verbunden, vorzugsweise verrastet sind. Das Griffunterteil 1B lagert mittels eines Basisteiles 1B-1 um die Schwenkachse Y1 schwenkbar auf einer drehfesten Achse 30. Das Basisteil 1B-1 weist eine Öffnung auf, über die das Basisteil 1B-1 im Zusammenbauzustand auf die drehfeste Achse 30 geschoben ist.

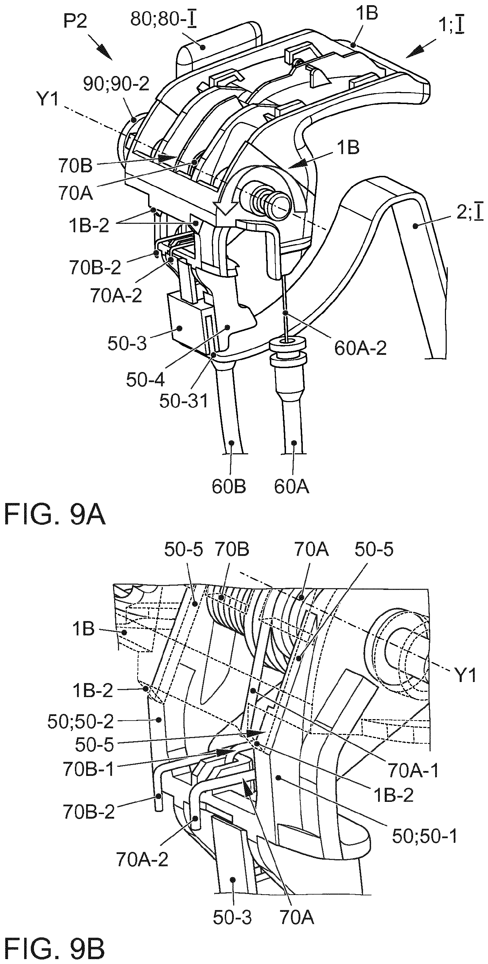

Das Griffunterteil 1B steht mit einem ersten Ende 70A-1 (Figur 9B) eines ersten Federelementes 70A in Verbindung, dessen zweites Ende 70A-2 (Figur 9B) sich an dem ortsfesten Gehäuse 20 (in Figur 9B nicht dargestellt) abstützt.

Dieses Federelement 70A wird auch als Griff-Federelement bezeichnet. Das erste Griff-Federelement 70A ist mit seinen Wicklungen lagerartig um die drehfeste Achse 30 gelegt, jedoch nicht fest mit der Achse 30 verbunden. Bei einer Betätigung und somit einer Schwenkbewegung des Griffes 1 um die Schwenkachse Y1 von der Ausgangsposition 1; I in eine Betätigungsendposition 1; II wird das erste Griff-Federelement 70A gespannt.

Die Ausgangsposition 1; I des Griffes 1 ist ergänzend in der nachfolgenden Figur 5A in einem Schnitt (Ansicht P1 von links) dargestellt.

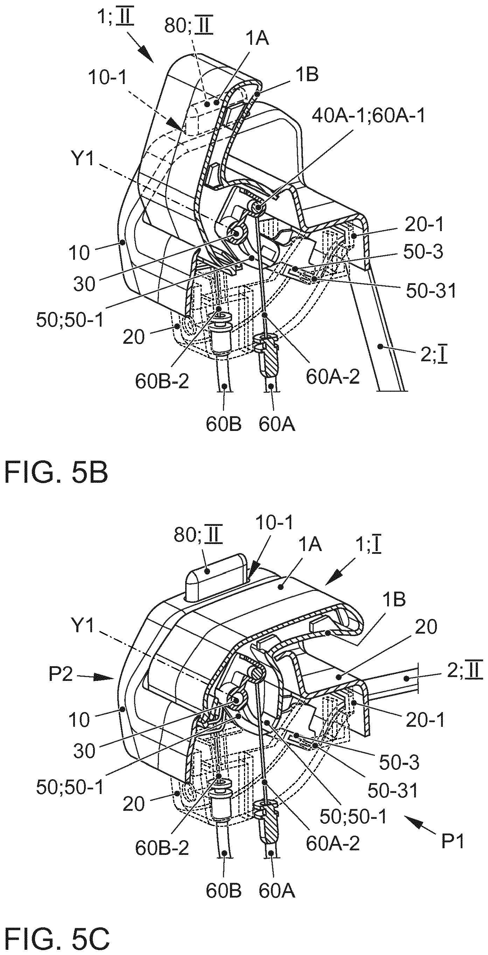

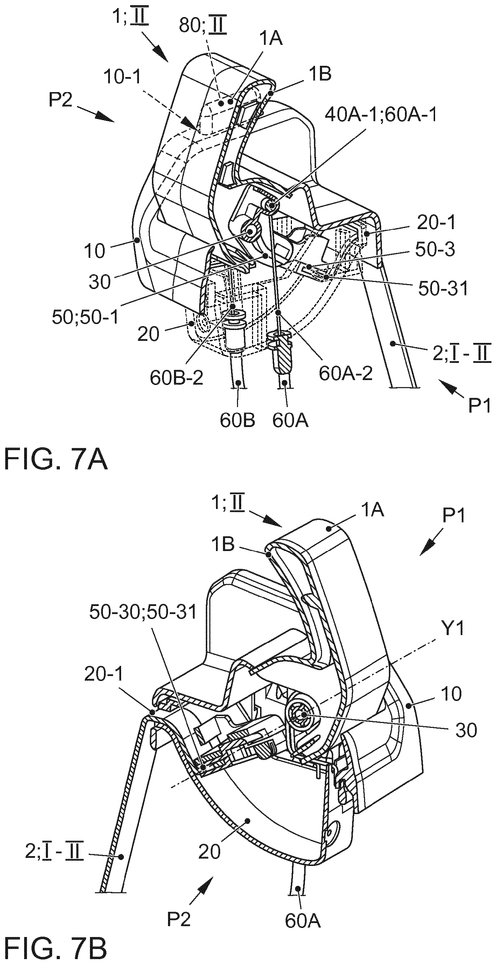

In den weiteren Figuren ist die Ausgangsposition 1; I des Griffes 1 ebenfalls mit dem Bezugszeichen 1; I gekennzeichnet. Die nach einem ersten Betätigungsvorgang abgeschlossene Betätigungsendposition 1; II des Griffes 1 ist in den Figuren 5B sowie 7A und 7B gezeigt und mit dem Bezugszeichen 1; II gekennzeichnet.

Durch das Spannen des ersten Griff-Federelementes 70A wird während des ersten Betätigungsvorganges eine Federkraft erzeugt, die eine entgegengesetzte Schwenkbewegung des Griffes 1 erzwingt, sobald der Griff 1 losgelassen wird, das heißt nicht mehr betätigt ist. Der Griff 1 kommt somit automatisch durch Federkraftunterstützung von der Betätigungsendposition 1; II in seine Ausgangsposition 1; I zurück.

Ferner ist auf der drehfesten Achse 30 ein Hebel 50 lagernd angeordnet, der ebenfalls nicht fest mit der Achse 30 in Verbindung steht, sondern der ebenfalls gegenüber der Achse 30 um die Schwenkachse Y1 schwenkbar ist.

Im Ausführungsbeispiel ist der Hebel 50 gemäß den Figuren 4A und 4B derart ausgebildet, dass ein erster (links dargestellt) Hebelbereich 50-1 und ein zweiter Hebelbereich 50-2 (rechts dargestellt) ausgebildet sind, zwischen denen das erste Griff-Federelement 70A und ein zweites Federelement 70B, welches als Hebel-Federelement bezeichnet wird, angeordnet sind. Auf das zweite Federelement 70B wird noch eingegangen.

Die Hebelbereiche 50-1, 50-2 weisen jeweils eine Öffnung auf, wobei der Hebel 50 über die Hebelbereiche im Zusammenbauzustand in das Basisteil 1B-1 geschoben wird, wonach der Hebel 50 mittels der durch die gegenüberliegenden Öffnungen des Basisteiles 1B-1 über die in die Öffnungen in den Hebelbereichen 50-1, 50-2 des Hebels 50 greifende drehfeste Achse 30 im Basisteil 1B-1 fixiert ist.

Insbesondere die Figur 4C zeigt weiter, dass die Hebelbereiche 50-1, 50-2 einen ersten Bowdenzugmitnehmer 40A und einen zweiten Bowdenzugmitnehmer 40B umfassen. Bezüglich der in y-Richtung (Doppelpfeil y) verlaufenden Schwenkachse Y1 sind die Bowdenzugmitnehmer 40A, 40B auf einer zur Schwenkachse Y1 parallel verlaufenden Achse hintereinander angeordnet.

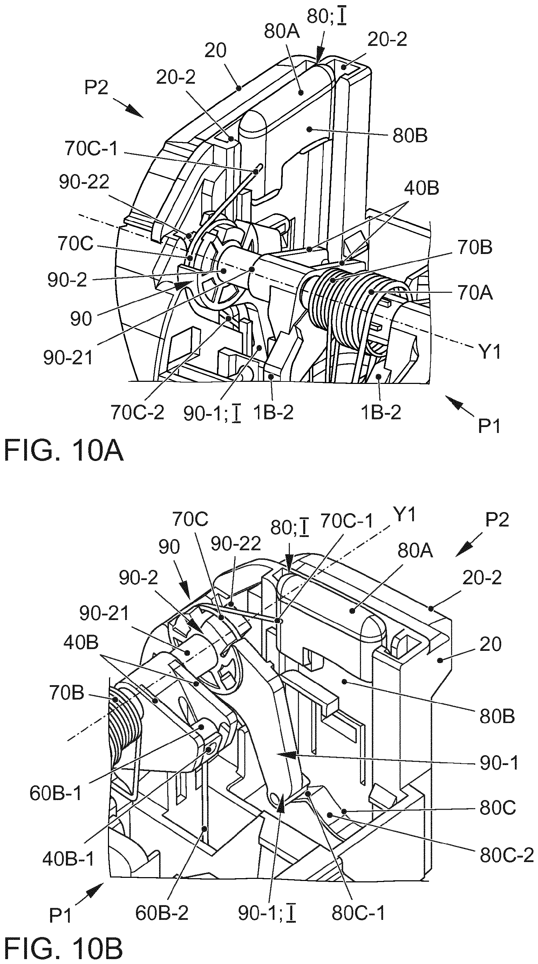

In den Bowdenzugmitnehmern 40A, 40B sind Bowdenzugeinhängungen 40A-1, 40B-1 für die beiden Bowdenzüge 60A, 60B vorgesehen. Die erste Bowdenzugeinhängung 40A-1 ist in den Figuren 5A bis 5C und Figur 10B dargestellt, während die analog ausgeführte zweite Bowdenzugeinhängung in den Figuren nicht sichtbar ist.

Im Zusammenbauzustand sind in den Bowdenzugeinhängungen 40A-1, 40B-1 Endstücke 60A-1, 60B-1 von in Bowdenzugmänteln laufenden Seelen 60A-2, 60B-2 des ersten Bowdenzuges 60A und des zweiten Bowdenzuges 60B eingehängt. Der Zusammenbauzustand der genannten Bauteile ist in Figur 4C am besten dargestellt.

Der in den Figuren 4A bis 4C nur als Draufsicht dargestellte Hebel 50 weist im Ausführungsbeispiel eine in den nachfolgenden Figuren sichtbare Schlaufeneinhängung 50-3 auf, in der ein zweites Betätigungselement 2 eingehängt ist. Es versteht sich, dass die Verbindung nicht zwingend über eine Schlaufeneinhängung 50-3 erfolgen muss. Andere Verbindungskonzepte sind möglich. Die Schlaufeneinhängung 50-31 ist im Ausführungsbeispiel in einem Aufnahmeelement 50-3 ausgebildet, welches mit einem Mittelstück 50-4 des Hebels 50 in Verbindung steht.

Das zweite Betätigungselement 2 ist als Zugschlaufe ausgebildet, wodurch die Zugschlaufe 2 zur Betätigung der Betätigungsvorrichtung B durch seine vorgebbare individuelle von Fahrzeug zu Fahrzeug anpassbare Schlaufenlänge aus einem Kofferraum des Fahrzeuges leicht erreichbar ist. Durch Ziehen an der Zugschlaufe 2 wird innerhalb eines zweiten Betätigungsvorganges die gewünschte Entriegelung der Betätigungsvorrichtung B bewirkt.

Die Zugschlaufe 2 befindet sich in den Figuren 4A, 4B und 4C in einer unbetätigten Ausgangsposition 2; I.

Der Hebel 50 steht im Ausführungsbeispiel seitlich mit einem ersten Ende 70B-1 (Figur 9B) eines zweiten Federelementes 70B in Verbindung, dessen zweites Ende 70B-2 (Figur 9B) sich an dem ortsfesten Gehäuse 20 abstützt, welches in Figur 9B nicht dargestellt ist. Das zweite Federelement wird auch als Hebel-Federelement bezeichnet. Das zweite Federelement 70B ist mit seinen Wicklungen analog zu dem ersten Federelement 70A lagerartig um die drehfeste Achse 30 gelegt, jedoch nicht fest mit der Achse 30 verbunden.

Der Hebel 50 steht im Ausführungsbeispiel seitlich mit einem ersten Ende 70B-1 (Figur 4B) eines zweiten Federelementes 70B in Verbindung, dessen zweites Ende 70B-2 (Figuren 4B und 10A) sich an dem ortsfesten Gehäuse 20 abstützt. Das zweite Federelement 70B ist mit seinen Wicklungen lagerartig um die Achse 30 gelegt, jedoch nicht fest mit der drehfesten Achse 30 verbunden.

Bei einer Betätigung und somit einer Bewegung der Zugschlaufe 2 von der Ausgangsposition 2; I in die Betätigungsendposition II unter gleichzeitiger Mitnahme und Verschwenkung des Hebels 50 um die Schwenkachse Y1, wird das zweite Federelement 70B gespannt. Durch das Spannen des zweiten Federelementes 70B wird eine Federkraft erzeugt, die eine entgegengesetzte Schwenkbewegung des Hebels 50 um die Schwenkachse Y1 und damit der Zugschlaufe 2 erzwingt, sobald die Zugschlaufe 2 losgelassen wird, das heißt nicht mehr betätigt ist.

Die Zugschlaufe 2 kommt somit automatisch durch Federkraftunterstützung von der Betätigungsendposition 2; II oder einer möglichen Zwischenposition 2; I-II in ihre Ausgangsposition 2; I zurück. Auf die Zwischenposition 2; I-II wird später noch eingegangen.

Die Figur 5A zeigt einen Schnitt in einer x/z-Ebene (Ansicht P1 von links) durch die Betätigungsvorrichtung B, wobei sich der Griff 1 und die Zugschlaufe 2 jeweils in Ausgangsposition I befinden. Es wird in diesem ersten Schnitt zudem noch einmal deutlich, dass der Griff 1 (erstes Betätigungselement) und die Zugschlaufe 2 (zweites Betätigungselement) gemeinsam in einer einzigen Betätigungsvorrichtung B integriert angeordnet sind.

Der Griff 1 und die Zugschlaufe 2 stehen, wie die Beschreibung zu den Figuren 4A und 4B bereits verdeutlicht hat, nicht direkt in Verbindung. Die Figur 5B zeigt einen weiteren Schnitt in der x/z-Ebene (Ansicht P1 von links) durch die Betätigungsvorrichtung B in Betätigungsendposition 1; II des Griffes 1. Zur Verdeutlichung sind beide Bowdenzüge 60A, 60B dargestellt, wobei in Figur 5B nur die erste Bowdenzugeinhängung 40A-1 und das erste Endstück 60A-1 der ersten Seele 60A-1 des ersten Bowdenzuges 60B sichtbar ist.

### Erster Betätigungsvorgang - Betätigung des Griffes 1:

Der Griff 1 wird durch Schwenken um die Schwenkachse Y1 in Figur 5B entgegen der Uhrzeigerrichtung (in +x-Richtung) geschwenkt. Dabei kommt das Indikatorelement 80 von seiner unbetätigten eingefahrenen Position 80; I in eine betätigte ausgefahrene Position 80; II.

Dabei nimmt der Griff 1 den Hebel 50 und damit die in den Hebel 50 integrierten Bowdenzugeinhängungen 40A-1, 40B-1 der beiden Bowdenzugmitnehmer 40A, 40B (siehe ergänzend die Figuren 9A, 9B) in Schwenkrichtung gemäß Figur 5B entgegen der Uhrzeigerrichtung mit, wie in den nachfolgenden Figuren noch näher erläutert wird.

In den Figuren 4B, 9A und 9B sind Mitnehmerfortsätze 1B-2 dargestellt, die an der Innenseite des Basisteiles 1B-1 des Griffes 1 angeordnet sind. In der Ausgangsposition I des Griffes 1; I liegen diese Mitnehmerfortsätze 1A an Anlageflächen 50-5 (vergleiche insbesondere Figur 9B) des Hebels 50 an.

Durch Schwenken des Griffes 1 um die Schwenkachse Y1 gemäß Figur 5B entgegen der Uhrzeigerrichtung wird der Hebel 50 ebenfalls in Uhrzeigerrichtung geschwenkt, wodurch die in den Bowdenzugeinhängungen 40A-1, 40B-1 eingehängten Endstücke 60A-1, 60B-1 und damit die mit den Endstücken 60A-1, 60B-1 verbundenen Seelen 60A-2, 60B-2 der Bowdenzüge 60A, 60B gezogen werden.

Bei diesem ersten Betätigungsvorgang werden die Bowdenzugmitnehmer 40A, 40B vom Basisteil 1B-1 des Griffunterteiles 1B (siehe Figuren 9A, 9B) mitgenommen.

Gleichzeitig wird das Griff-Federelement 70 gespannt.

Bei der Schwenkbewegung des Griffes 1 um die Schwenkachse Y1 kommen die Mitnehmerfortsätze 1B-2 mit den Anlageflächen 50-5 des Hebels 50 in Kontakt, wodurch der Hebel 50 wie erläutert gemäß Figur 5B entgegen der Uhrzeigerrichtung mitgenommen wird, so dass sich dadurch die über die Schlaufeneinhängung 50-31 mit dem Hebel 50 verbundene Zugschlaufe 2 nach rechts in die Zwischenposition 2; I-II mitbewegt. Der Zeitpunkt der Mitnahme des Hebels 50 wird konstruktiv durch die Ausgestaltung und/oder Anordnung der Mitnehmerfortsätze am Griffunterteil 1B oder die Ausgestaltung und/oder Anordnung des Hebels 50 im Bereich der Anlagenflächen 50-5 bestimmt, beziehungsweise kann entsprechend variiert werden.

### Zweiter Betätigungsvorgang - Betätigung der Zugschlaufe 2:

Die Figur 5C zeigt einen weiteren Schnitt in der x/z-Ebene (Ansicht P1 von links) durch die Betätigungsvorrichtung B mit der Betätigungsendposition 2; II der Zugschlaufe 2. Dabei kommt das Indikatorelement 80 von seiner unbetätigten eingefahrenen Position 80; I in eine betätigte ausgefahrene Position 80; II.

Im Verlauf der Betätigung, das heißt dem Ziehen an der Zugschlaufe 2, wird die Zugschlaufe 2 stetig von der Ausgangsposition 2; I in die Betätigungsendposition 2; II bewegt, wobei die Zugschlaufe 2 aus einer Gehäuseöffnung 20-1 des Gehäuses hindurchgeführt ist und bei der Betätigung aus der Gehäuseöffnung 20-1 herausbewegt wird.

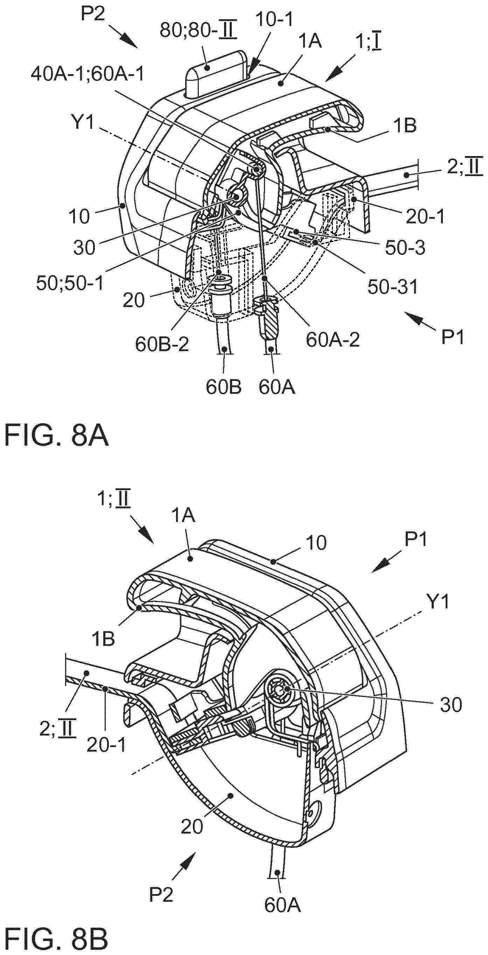

Die Zugschlaufe 2 wird gezogen, wodurch der mit der Zugschlaufe 2 über die Schlaufeneinhängung 50-31 verbundene Hebel 50 gemäß Figur 5C (analog zu dem ersten Betätigungsvorgang) entgegen der Uhrzeigerrichtung (in +x-Richtung) um die Schwenkachse Y1 mitgeschwenkt wird. Die in den hebelintegrierten Bowdenzugeinhängungen 40A-1, 40B-1 eingehängten Endstücke 60A-1, 60B-1 und damit die mit den Endstücken 60A-1, 60B-1 verbundenen Seelen 60A-2, 60B-2 der Bowdenzüge 60A, 60B werden analog zu dem ersten Betätigungsvorgang gezogen. Der Hebel 50 schwenkt somit ausgehend von seiner Position in der Figur 5A durch die Betätigung der Zugschlaufe 2 in die Betätigungsendposition 2; II der Zugschlaufe 2 entgegen der Uhrzeigerrichtung in die Position gemäß Figuren 8A und 8B.

Bei beiden Betätigungsvorgängen, Griffbetätigung und Zugschlaufenbetätigung, werden somit kurz zusammengefasst durch die Verschwenkung eines einzigen Hebels 50 gleichzeitig die Bowdenzüge 60A, 60B gezogen.

Im Laufe der Schwenkbewegung des Hebels 50 um die Schwenkachse Y1 kommt es bei dem zweiten Betätigungsvorgang während der Betätigung der Zugschlaufe 2 von der Ausgangsposition 2; I in die Betätigungsendposition 2; II nicht dazu, dass der Griff 1 von dem Hebel 50 mitgenommen wird.

In vorteilhafter Weise sind Griff 1 und Zugschlaufe 2 bei dem zweiten Betätigungsvorgang vollständig entkoppelt, wodurch bei der Betätigung der Zugschlaufe 2 von der Ausgangsposition 2; I in die Betätigungsendposition 2; II nicht die Gefahr besteht, dass sich eine Person an dem sich mitbewegenden und gegenüber dem Gehäuse 20 aufschwenkenden Griff 1 in irgendeiner Weise einklemmt. Der bei der Betätigung der Zugschlaufe 2 vollständig von der Zugschlaufe 2 entkoppelte Griff 1 bleibt in seiner Ausgangsposition 1; I.

Die Zwischenposition 2; I-II der Zugschlaufe 2 wird durch Mitnahme des Hebels 50 bei der vollständigen Betätigung des Griffes 1 (Griff-Betätigung des ersten Betätigungsvorganges) von der Ausgangsposition 1; I in die Betätigungsendposition 1; II erreicht.

Die Betätigungsendposition 2; II der Zugschlaufe 2 wird ausgehend von der Ausgangsposition 2; I durch vollständiges Ziehen der Zugschlaufe 2 (Zugschlaufenbetätigung des zweiten Betätigungsvorganges) erreicht.

### Betätigungsvorrichtung B in Ausgangsposition I:

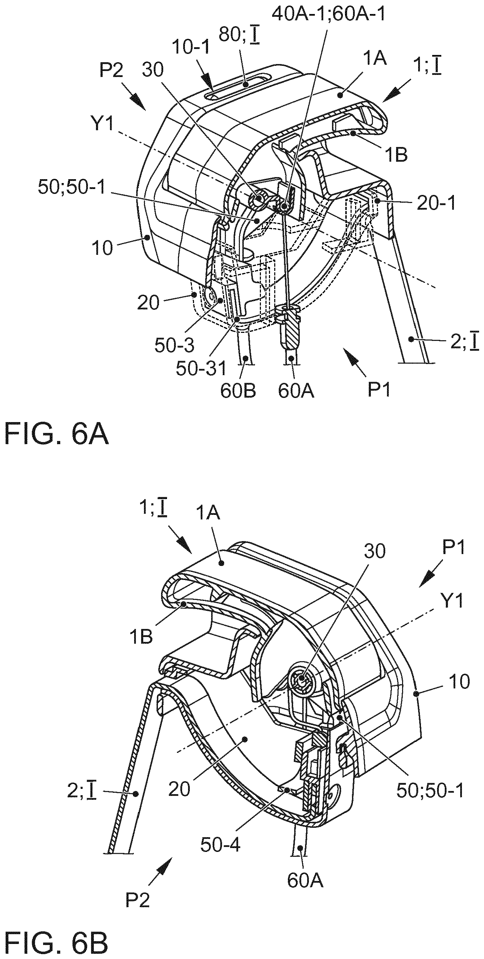

Die Figuren 6A und 6B zeigen ergänzend zu der vorhergehenden Beschreibung analog zu der Figur 5A die nicht betätigte Betätigungsvorrichtung B in Ausgangsposition I in Schnitten jeweils in der x/z-Ebene, wobei die Figur 6A den rechten Teil der Betätigungsvorrichtung B (Ansicht P1 von links) und die Figur 6B den linken Teil der Betätigungsvorrichtung B (Ansicht P2 von rechts) zeigen. Befindet sich die nicht betätigte Betätigungsvorrichtung B in ihrer Ausgangsposition I, ist das Indikatorelement 80 in seiner unbetätigten eingefahrenen Position 80; I.

Betätigungsvorrichtung B mit dem Griff 1 in Betätigungsendposition II nach dem ersten Betätigungsvorgang:
Die Figuren 7A und 7B zeigen ergänzend zu der vorhergehenden Beschreibung mit gleichen Bezugszeichen analog zu der Figur 5B, die - nach dem ersten Betätigungsvorgang - betätigte Betätigungsvorrichtung B in Betätigungsendposition II in Schnitten jeweils in der x/z-Ebene, wobei die Figur 7A den rechten Teil der Betätigungsvorrichtung B (Ansicht P1 von links) und die Figur 7B den linken Teil der Betätigungsvorrichtung B (Ansicht P2 von rechts) zeigt. Befindet sich die betätigte Betätigungsvorrichtung B in ihrer Betätigungsendposition II, nimmt das Indikatorelement 80 ausgehend von seiner unbetätigten eingefahrenen Position 80;I die betätigte ausgefahrene Position 80; II (in Figur 7B nicht sichtbar) ein.

Es wird in den Figuren 7A und 7B noch einmal deutlich, dass sich der Hebel 50 und die Zugschlaufe 2 bei Erreichen der Betätigungsendposition II des Griffes 2 in die Zwischenposition I-II bewegt haben. Die Schlaufenlänge der außerhalb der Öffnung 20-1 des Gehäuses 20 liegenden Zugschlaufe 2 verlängert sich dadurch um ein vorgebbares Maß.

Betätigungsvorrichtung B mit der Zugschlaufe 2 in Betätigungsendposition II nach dem zweiten Betätigungsvorgang:
Die Figuren 8A und 8B zeigen ergänzend zu der vorhergehenden Beschreibung analog zu der Figur 5C, die betätigte Betätigungsvorrichtung B in Betätigungsendposition II in Schnitten jeweils in der x/z-Ebene, wobei die Figur 8A den rechten Teil der Betätigungsvorrichtung B (Ansicht P1 von links) und die Figur 8B den linken Teil der Betätigungsvorrichtung B (Ansicht P2 von rechts) zeigt. Befindet sich die betätigte Betätigungsvorrichtung B in ihrer Betätigungsendposition II, nimmt das Indikatorelement 80 ausgehend von seiner unbetätigten eingefahrenen Position 80;I die betätigte ausgefahrene Position 80; II (in Figur 7B nicht sichtbar) ein.

Rückverstellung des Griffes 1 und der Zugschlaufe 2 aus ihrer jeweiligen Betätigungsendposition II in die Ausgangsposition I:
Bei der Betätigung des Griffes 1 und der Zugschlaufe aus der Ausgangsposition I in die Betätigungsendposition II wurde jeweils, wie bereits erläutert, das Griff-Federelement 70A und das Hebel-Federelement 70B gespannt. Beim Loslassen des Griffes 1 beziehungsweise der Zugschlaufe 2 kommt es ja nach der Betätigung ausgehend von der Betätigungsendposition II zu einer federkraftunterstützten Rückstellung des Griffes 1 und des Hebels 50 in die Ausgangsposition I über das erste und zweite Federelement 70A, 70B, wenn sich der Griff 1 (erster Betätigungsvorgang) in der Betätigungsendposition II befindet oder zur federkraftunterstützten Rückstellung des Hebels 50 und damit der Zugschlaufe 2 in die Ausgangsposition I über das zweite Federelement 70B, wenn sich die Zugschlaufe 2 (zweiter Betätigungsvorgang) in der Betätigungsendposition II befindet.

Die Rückverstellung erfolgt nach dem Loslassen des Griffes 1 oder der Zugschlaufe 2 selbsttätig aus der Betätigungsendposition II des Griffes 1 und der Zugschlaufe 2 zurück in die Ausgangsposition I des Griffes 1 und der Zugschlaufe 2.

Befinden sich die Zugschlaufe 2 und der Hebel 50 bei der Betätigung des Griffes 1 in der Zwischenposition I-II, kommt es selbsttätig zu einer federkraftunterstützten Rückstellung des Griffes 1, des Hebels 50 und damit der Zugschlaufe 2 in die Betätigungsendposition II des Griffes 1 und der Zugschlaufe 2.

Befindet sich die betätigte Betätigungsvorrichtung B nach Loslassen des Griffes 1 oder der Zugschlaufe 2 wieder in ihrer unbetätigten eingefahrenen Ausgangsposition II, nimmt das Indikatorelement 80 ausgehend von seiner betätigten ausgefahrenen Position 80; II wieder die unbetätigte eingefahrene Position 80; I die betätigte ausgefahrene Position 80; II ein.

Die Figur 9A zeigt unter Weglassung des Gehäuses 20 eine vergrößerte perspektivische Darstellung der Betätigungselemente 1, 2 der Betätigungsvorrichtung B in ihrer Ausgangsposition 1; I und 2; I (Ansicht von links). Die Figur 9B zeigt ebenfalls unter Weglassung des Gehäuses 20 eine noch weiter vergrößerte perspektivische Darstellung des Hebels 50 zur Verdeutlichung des ersten Betätigungsvorganges bei Betätigung des transparent dargestellten Griffes 1 (Ansicht von links).

In den in einer Zusammenschau weiter erläuterten Figuren 9A und 9B sind insbesondere die Mitnehmerfortsätze 1B-2 dargestellt, die an der Innenseite des Basisteiles 1B-1 des Griffes 1 angeordnet sind.

Insbesondere aus Figur 9B wird deutlich, dass der Hebel 50 zwei Anlageflächen 50-5 aufweist. Befinden sich der Griff 1 (transparent dargestellt) und die Zugschlaufe 2 (nicht dargestellt) in Ausgangsposition 1; I und 2; I, ist der Hebel 50 unbetätigt. Bei einem unbetätigten Hebel 50 liegen die zu den Anlageflächen 50-5 gerichteten Flächen der Mitnehmerfortsätze 1B-2 an den Anlageflächen 50-5 an. Wird der Griff 1 betätigt, bewegt sich der Hebel 50 gemäß den Figuren 9A, 9B entgegen der Uhrzeigerrichtung, da die Mitnehmerfortsätze 1B-2 eine Kraft auf die Anlageflächen 50-5 ausüben. Wird die Zugschlaufe 2 betätigt, bewegt sich der Hebel 50 gemäß den Figuren 9A, 9B ebenfalls entgegen der Uhrzeigerrichtung, wobei sich die Anlageflächen 50-5 von den zu den Anlageflächen 50-5 gerichteten Flächen der Mitnehmerfortsätze 1B-2 entfernen.

Im Hintergrund der Figuren 9A, 9B ist auf der ersten Schwenkachse Y1 ein Indikatorelement-Hebel 90 angeordnet. Der Indikatorelement-Hebel 90 folgt stets einer um die erste Schwenkachse Y1 ausgeführten Schwenkbewegung des Hebels 50, wie im Zusammenhang mit den weiteren Figuren 10A und 10B detailliert erläutert wird.

Wie anhand der Figuren 10A und 10B verdeutlicht werden soll, ist der Indikatorelement-Hebel 90 drehfest mit dem Hebel 50 verbunden. Erfindungsgemäß ist gemäß dem Ausführungsbeispiel vorgesehen, dass der Indikatorelement-Hebel 90 einerseits im Gehäuse 20 drehbar und andererseits auf der drehfesten Achse 30 am Hebel 50 drehfest gelagert ist. Mit anderen Worten, dreht sich der Hebel um die erste Schwenkachse Y1 in oder entgegen der Uhrzeigerrichtung, bewegt sich der Indikatorelement-Hebel 90 entsprechend mit.

Der Indikatorelement-Hebel 90 umfasst eine Hebelarmscheibe 90-3 und ein Lagerelement 90-2, welches auf der einen Seite ein (zweites) gehäuseseitiges Lagerteil 90-22 und auf der anderen Seite ein (erstes) hebelseitiges Lagerteil 90-21 der Hebelarmscheibe 90-3 aufweist.

Im Gehäuse 20 ist eine geeignete Lagerstelle in einer sich im Gehäuse 20 in y-Richtung erstreckenden Vertiefung eingearbeitet, so dass das gehäuseseitige Lagerteil 90-22 drehbar in der Lagerstelle liegt.

Am Hebel 50 ist ebenfalls eine geeignete Lagerstelle als Verrastung des hebelseitigen Lagerteiles 90-21 an dem Hebel 50 über korrespondierende Rastteile ausgebildet, so dass der Indikatorelement-Hebel 90 drehfest am Hebel 50 gelagert, insbesondere verrastet ist.

Auf der Hebelarmscheibe 90-3 ist ein Federelement, welches nachfolgend als Indikatorelement-Federelement 70C bezeichnet wird, angeordnet. Das Indikatorelement-Federelement 70C weist ein erstes Ende 70C-1 und ein zweites Ende 70C-2 auf. Das erste Ende 70C-1 stützt sich im Indikatorelement 80 ab. Das zweite Ende 70C-2 stützt sich am Gehäuse 20 ab. Bevorzugt stützt sich das erste Ende 70C-1 im Indikatorelement-Unterteil 80B ab. In der betätigten Position des Indikatorelementes 80; II ist das erste Ende 70C-1 somit nicht sichtbar.

Im Zusammenbauzustand ist das Indikatorelement-Federelement 70C unter Vorspannung auf der Hebelarmscheibe 90-3 eingebaut. Das Indikatorelement 80 kann jedoch trotz der Vorspannung seine unbetätigte Position 80; I nicht verlassen, da ein offenes Ende des Hebelarms 90-1 des Indikatorelement-Hebels 90 das Indikatorelement 80 in der unbetätigten Position 80; I hält, wie nachfolgend erläutert wird.

Das offene Ende des Hebelarms 90-1 liegt an einer Kontur 80C des Indikatorelementes 80 an. Die Kontur 80C ist als seitlicher in y-Richtung abgehender Steg ausgebildet, der eine konturierte Anlagefläche ausbildet, an der das offene Ende des Hebelarms 90-1 anliegt. Die Anlagefläche bildet einen ersten Konturbereich 80C-1 und einen zweiten Konturbereich 80C-1.

In den Figuren 10A und 10B befindet sich der Hebel 50 und ein Hebelarm 90-1 des Indikatorelement-Hebels 90 in einer unbetätigten Position 90-1; I, so dass auch das Indikatorelement 80 in einer unbetätigten Position 80; I angeordnet ist. Aus dem Gehäuse 20 steht ausschließlich das Indikatorelement-Oberteil 80A heraus. Das offene Ende 90-1 liegt an dem ersten Konturbereich 80C-1 an. Der Hebelarm 90-1 geht von der Hebelarmscheibe 90-3 ab.

Bei Betätigung des Hebels 50 gemäß dem ersten oder zweiten Betätigungsvorgang wird der Hebelarm 90-1 des Indikatorelement-Hebels 90 entgegen der Uhrzeigerrichtung verschwenkt, so dass das erste Ende 70C-1 des vorgespannten Indikatorelement-Federelementes 70C eine Kraft auf das Indikatorelement 80 ausübt, die eine vertikale translatorische Bewegung des Indikatorelementes 80 innerhalb der Tasche 20-2 bewirkt. Dadurch steht schließlich das Indikatorelement-Oberteil 80A (vollständig) und das Indikatorelement-Unterteil 80B (teilweise) aus dem Gehäuse 20 heraus. Dadurch wird, da das Indikatorelement-Unterteil 80B vorzugsweise in einer Signalfarbe, insbesondere rot ausgestaltet ist, dem Anwender signalisiert, dass es zu einer Entriegelung zwischen dem Rückenlehnenteil 240 und dem Sitzteil 220 gekommen ist. Über ein einziges Indikatorelement 80 wird bei der vorgestellten Betätigungsvorrichtung B signalisiert, dass die Beschläge c1 und c2, die Bestandteile der kombinierten Entriegelungs- und Verstellmechanik entriegelt sind.

Gleichzeitig läuft das offene Ende 90-1 des Indikatorelement-Hebels 90 über den ersten Konturbereich 80C-1 auf dem zweiten Konturbereich 80C-2 der Anlagefläche des Steges des Indikatorelementes 80 am Indikatorelement-Unterteil 80B ab.

Die Kontur 80C und deren Konturbereiche 80C-1, 80C-2 stellen eine genaue Führung des Indikatorelementes 80 bei der vertikalen Bewegung von der unbetätigten Position 80; I in die betätigte Position 80; II und umgekehrt sicher. Bei einer Rückbetätigung des Hebels 50 gemäß dem ersten oder zweiten Betätigungsvorgang wird der Hebelarm 90-1 des Indikatorelement-Hebels 90 gemäß den Figuren 10A, 10B in Uhrzeigerrichtung verschwenkt, wodurch das offene Ende des Indikatorelement-Hebels 90 auf den zweiten Konturbereich 90-C2 abläuft. Das Indikatorelement 80 wird gegen die auf das Indikatorelement 80 wirkende Kraft des Indikatorelement-Federelementes 70C in der Tasche 20-2 translatorisch vertikal nach unten bewegt, wobei sich das Indikatorelement-Federelement 70C entsprechend spannt. Schließlich liegt das offene Ende in der unbetätigten Position des Indikatorelementes 80; I wieder an dem ersten Konturbereich 80C-1 der Anlagefläche des Steges an. Bei der Betätigung des Hebels 50 in Uhrzeigerrichtung gemäß den Figuren 10, 10B, gemäß dem ersten oder zweiten Betätigungsvorgang, werden die Beschläge c1, c2 verriegelt und das Indikatorelement 80 nimmt seine unbetätigte Position 80; I wieder ein, so dass schließlich nur noch das Indikatorelement-Oberteil 80A über die Oberseite des Gehäuses 20 der Betätigungsvorrichtung B heraussteht.

### Bezugszeichenliste

### Stand der Technik

- 100: Fahrzeugsitz
- 120: Sitzteil
- 140: Rückenlehnenteil
- a1: erstes Betätigungselement
- a2: zweites Betätigungselement
- b1: Bowdenzug
- b1A: Bowdenzug
- b1B: Bowdenzug
- b2: Bowdenzug
- b2A: Bowdenzug
- b2B: Bowdenzug
- c1: Beschlag
- c2: Beschlag
- d: Übertragungselement

### Erfindung

- 200: Fahrzeugsitz
- 220: Sitzteil
- 240: Rückenlehnenteil
- B: Betätigungsvorrichtung
- I: unbetätigte Ausgangsposition des Griffes 1 und der Zugschlaufe 2
- II: Betätigungsendposition des Griffes 1 und der Zugschlaufe 2
- I-II: Zwischenposition der Zugschlaufe 2
- 1: erstes Betätigungselement, Griff
- 1; I: erstes Betätigungselement - unbetätigt -
- 1; II: erstes Betätigungselement - betätigt -
- 1A: Griffoberteil
- 1B: Griffunterteil
- 1B-1: Basisteil
- 1B-2: Mitnehmerfortsatz
- 2: zweites Betätigungselement, Zugschlaufe
- 2; I: zweites Betätigungselement - unbetätigt -
- 2; II: zweites Betätigungselement - betätigt -
- 2; I-II: zweites Betätigungselement - Zwischenposition -
- 10: Blende
- 10-1: Öffnung
- 20: Gehäuse
- 20-1: Öffnung
- 20-2: Tasche
- 30: Achse
- 40A: erster Bowdenzugmitnehmer
- 40A-1: erste Bowdenzugeinhängung
- 40B: zweiter Bowdenzugmitnehmer
- 40B-1: zweite Bowdenzugeinhängung
- 50: Hebel
- 50-1: erster Hebelbereich
- 50-2: zweiter Hebelbereich
- 50-3: Aufnahmeelement
- 50-31: Schlaufeneinhängung
- 50-4: Mittelstück
- 50-5: Anlagefläche
- 60A: erster Bowdenzug
- 60A-1: Endstück
- 60A-2: Seele
- 60B: zweiter Bowdenzug
- 60B-1: Endstück
- 60B-2: Seele
- 70A: Griff-Federelement
- 70A-1: erstes Ende
- 70A-2: zweites Ende
- 70B: Hebel-Federelement
- 70B-1: erstes Ende
- 70B-2: zweites Ende
- 70C: Indikatorelement-Federelement
- 70C-1: erstes Ende
- 70C-2: zweites Ende
- 80: Indikatorelement
- 80A: Indikatorelement-Oberteil
- 80B: Indikatorelement-Unterteil
- 80C: Kontur
- 80C-1: erster Konturbereich
- 80C-2: zweiter Konturbereich
- 80; I: unbetätigte Position des Indikatorelementes
- 80; II: betätigte Position des Indikatorelementes
- 90: Indikatorelement-Hebel
- 90-1: Hebelarm
- 90-1; I: Hebelarm unbetätigt
- 90-2: Lagerelement
- 90-3: Hebelarmscheibe
- 90-21: erstes Lagerteil
- 90-22: zweites Lagerteil
- +x: Richtung in der üblichen Fahrtrichtung eines Fahrzeugs
- -x: Richtung entgegen der üblichen Fahrtrichtung +x
- y: Richtung in der Horizontalen quer zur x-Richtung
- z: Richtung in der Vertikalen quer zur x-Richtung
- Y1: Schwenkachse
- P1: Ansicht von links
- P2: Ansicht von rechts

## Patentansprüche

1. Betätigungsvorrichtung (B) zur Entriegelung einer verriegelten Entriegelungs- und/oder Verstellmechanik eines Fahrzeugsitzes (200) mit einem ersten und einem zweiten Betätigungselement (1, 2), wobei das erste und zweite Betätigungselement (1, 2) sowie ein Indikatorelement (80) gemeinsam in einem Gehäuse (20) der Betätigungsvorrichtung (B) angeordnet sind, wobei die Betätigungselemente (1, 2) mit mindestens einer Betätigungsmechanik (40A, 50, 60A; 40B, 50, 60B) in Verbindung stehen, die bei Betätigung eines der Betätigungselemente (1, 2) stets für eine Entriegelung der verriegelten Entriegelungs- und/oder Verstellmechanik sorgt, wobei die Betätigung eines der Betätigungselemente (1, 2) gleichzeitig zu einer Betätigung und Anzeige des Indikatorelementes (80) über den entriegelten oder verriegelten Zustand der Entriegelungs- und/oder Verstellmechanik führt.

2. Betätigungsvorrichtung (B) nach Anspruch 1, **dadurch gekennzeichnet, dass** unabhängig voneinander eine Betätigung des ersten Betätigungselementes (1) oder eine Betätigung des zweiten Betätigungselementes (2) über die mindestens eine Betätigungsmechanik (40A, 50, 60A; 40B, 60, 60B) für die Entriegelung der verriegelten Entriegelungs- und/oder Verstellmechanik sorgt.

3. Betätigungsvorrichtung (B) nach Anspruch 1 oder 2, **dadurch gekennzeichnet, dass** das erste Betätigungselement (1) gemeinsam mit einem mit ihm wirkverbundenen Hebel (50) auf einer Achse (30) drehbar gelagert ist, und das erste Betätigungselement (1) auf einer durch die Achse (30) ausgebildeten Schwenkachse (Y1) von einer Ausgangsposition (1; I) in eine Betätigungsendposition (1; II) schwenkbar ist, wodurch die mindestens eine Betätigungsmechanik (40A, 50, 60A; 40B, 50, 60B) bei einer Betätigung des ersten Betätigungselementes (1) von einer unbetätigten Ausgangsposition (1; I) in eine Betätigungsendposition (1; II) für die Entriegelung der verriegelten Entriegelungs- und/oder Verstellmechanik eines Fahrzeugsitzes (200) sorgt und gleichzeitig das Indikatorelement (80) von seiner unbetätigten Position (80; I) in seine betätigte Position (80; II) überführt.

4. Betätigungsvorrichtung (B) nach Anspruch 1 oder 2, **dadurch gekennzeichnet, dass** das zweite Betätigungselement (2) mit dem Hebel (50) in Wirkverbindung steht, der auf der durch die Achse (30) ausgebildeten Schwenkachse (Y1) schwenkbar gelagert ist, wobei das zweite Betätigungselement (2) von einer Ausgangsposition (2; I) in eine Betätigungsendposition (2; II) bewegbar ist, wodurch die mindestens eine Betätigungsmechanik (40A, 50, 60A; 40B, 50, 60B) bei einer Betätigung des zweiten Betätigungselementes (2) von einer unbetätigten Ausgangsposition (2; I) in eine Betätigungsendposition (2; II) für die Entriegelung der verriegelten Entriegelungs- und/oder Verstellmechanik eines Fahrzeugsitzes (200) sorgt und gleichzeitig das Indikatorelement (80) von seiner unbetätigten Position (80; I) in seine betätigte Position (80; II) überführt.

5. Betätigungsvorrichtung (B) nach Anspruch 3 oder 4, **dadurch gekennzeichnet, dass** der mit dem ersten und zweiten Betätigungselement (1, 2) in Wirkverbindung stehende Hebel (50) über mindestens einen Bowdenzugmitnehmer (40A, 40B) verfügt, wobei der Hebel (50) bei der Betätigung eines der Betätigungselemente (1, 2) von der Ausgangsposition (1; I, 2; I) in die Betätigungsendposition (1; II, 2; II) den Bowdenzugmitnehmer (40A, 40B) verlagert, der mit einem Ende des mindestens einen Bowdenzuges (60A, 60B) in Verbindung steht und der mit seinem anderen Ende mit der Entriegelungs- und/oder Verstellmechanik eines Fahrzeugsitzes (200) verbunden ist.

6. Betätigungsvorrichtung (B) nach Anspruch 3 oder 4, **dadurch gekennzeichnet, dass** das Indikatorelement (80) mit einem Indikatorelement-Hebel (90) in Wirkverbindung steht, der drehbar auf der Achse (30) angeordnet und drehfest mit dem auf der Achse (30) um die erste Schwenkachse (Y1) drehbaren Hebel (50) verbunden ist.

7. Betätigungsvorrichtung (B) nach Anspruch 6, **dadurch gekennzeichnet, dass** der Indikatorelement-Hebel (90) eine Hebelarmscheibe (90-3) aufweist, die ein Lagerelement (90-2) ausbildet, welches ein erstes Lagerteil (90-21) und ein zweites Lagerteil (90-22) umfasst, wobei das erste Lagerteil (90-21) drehfest an dem Hebel (50) und das zweite Lagerteil (90-22) drehbar in dem Gehäuse (20) der Betätigungsvorrichtung (B) in jeweils dafür vorgesehene Lagerstellen gelagert ist.

8. Betätigungsvorrichtung (B) nach Anspruch 7, **dadurch gekennzeichnet, dass** die Hebelarmscheibe (90-3) ein Indikatorelement-Federelement (70C) trägt, welches ein erstes Ende (70C-1) und ein zweites Ende (70C-2) aufweist, wobei sich das erste Ende (70C-1) im Indikatorelement (80) und das zweite Ende (70C-2) am Gehäuse (20) der Betätigungsvorrichtung (B) abstützt.

9. Betätigungsvorrichtung (B) nach Anspruch 7, **dadurch gekennzeichnet, dass** der Hebelarm (90-1) des Indikatorelement-Hebels (90) an der Hebelarmscheibe (90-3) ein offenes Ende aufweist, welches an einer Kontur (80C) des Indikatorelementes 80 anliegt, wobei die Kontur (80C) als Steg ausgebildet ist, der eine konturierte Anlagefläche ausbildet, an der das offene Ende des Hebelarms (90-1) anliegt, wobei die Anlagefläche einen ersten Konturbereich (80C-1) und einen zweiten Konturbereich (80C-1) ausbildet.

10. Betätigungsvorrichtung (B) nach den Ansprüchen 7 bis 9, **dadurch gekennzeichnet, dass** bei der Betätigung eines der Betätigungselemente (1, 2) von der Ausgangsposition (1; I, 2; I) in die Betätigungsendposition (1; II, 2; II) und einer einhergehenden Betätigung des Hebels (50) der Hebelarm (90-1) des Indikatorelement-Hebels (90) verschwenkt wird, wodurch das erste Ende (70C-1) des vorgespannten Federelementes (70C) eine Kraft auf das Indikatorelement (80) ausübt, wodurch eine vertikale translatorische Bewegung des Indikatorelementes 80 innerhalb der Tasche (20-2) bewirkt wird, wodurch das Indikatorelement (80) von seiner unbetätigten eingefahrenen Position (80; I) in die betätigte ausgefahrene Position (80; II) kommt.

11. Betätigungsvorrichtung (B) nach Anspruch 10, **dadurch gekennzeichnet, dass** das Indikatorelement (80) ein Indikatorelement-Oberteil (80A) und ein Indikatorelement-Unterteil (80B) aufweist, wobei das Indikatorelement-Oberteil (80A) und das Indikatorelement-Unterteil (80B) in der unbetätigten eingefahrenen Position (80; I) unterhalb einer Oberseite des Gehäuses (20) der Betätigungsvorrichtung B angeordnet sind, und das Indikatorelement-Oberteil (80A) in einer Öffnung (20-1) des Gehäuses (20) von außen sichtbar einsteht, wobei in der betätigten ausgefahrenen Position (80; II) das Indikatorelement-Oberteil (80A) (vollständig) und das Indikatorelement-Unterteil (80B) die Öffnung (20-1) zumindest teilweise durchgreifen, so dass das Indikatorelement-Oberteil (80A) und das Indikatorelement-Unterteil (80B) aus dem Gehäuse (20) herausstehen und von außen sichtbar sind.

12. Fahrzeugsitz (200) mit einer Betätigungsvorrichtung (B) nach mindestens einem der Ansprüche 1 bis 11.

## Claims

1. Actuation device (B) for unlocking a locked unlocking and/or adjustment mechanism of a vehicle seat (200), having a first and a second actuating element (1, 2), wherein the first and second actuating elements (1, 2) and also an indicator element (80) are arranged together in a housing (20) of the actuation device (B), wherein the actuating elements (1, 2) are connected to at least one actuating mechanism (40A, 50, 60A; 40B, 50, 60B), which serves at all times for unlocking the locked unlocking and/or adjustment mechanism upon the actuation of one of the actuating elements (1, 2), wherein the actuation of one of the actuating elements (1, 2) simultaneously leads to an actuation and display of the indicator element (80) regarding the unlocked or locked state of the unlocking and/or adjustment mechanism.

2. Actuation device (B) according to claim 1, **characterized in that**, independently of one another, an actuation of the first actuating element (1) or an actuation of the second actuating element (2) via the at least one actuating mechanism (40A, 50, 60A; 40B, 60, 60B) provides for the unlocking of the locked unlocking and/or adjustment mechanism.

3. Actuation device (B) according to claim 1 or 2, **characterized in that** the first actuating element (1) together with a lever (50) operatively connected thereto is rotatably mounted on an axle (30), and the first actuating element (1) is pivotable, on a pivot axle (Y1) formed by the axle (30), from a starting position (1; I) into an actuation end position (1; II), whereby the at least one actuating mechanism (40A, 50, 60A; 40B, 50, 60B), upon the actuation of the first actuating element (1) from a unactuated starting position (1; I) into an actuation end position (1; II), ensures the unlocking of the locked unlocking and/or adjustment mechanism of a vehicle seat (200) and at the same time transitions the indicator element (80) from its unactuated position (80; I) into its actuated position (80; II).

4. Actuation device (B) according to claim 1 or 2, **characterized in that** the second actuating element (2) is operatively connected with the lever (50), which lever (50) is rotatably mounted on pivot axle (Y1) formed by the axle (30), wherein the second actuating element (2) can be moved from a starting position (2; I) into an actuation end position (2; II), whereby the at least one actuating mechanism (40A, 50, 60A; 40B, 50, 60B), upon the actuation of the second actuating element (2) from an unactuated starting position (2; I) into an actuation end position (2; II), ensures the unlocking of the locked unlocking and/or adjustment mechanism of a vehicle seat (200) and at the same time transitions the indicator element (80) from its unactuated position (80; I) into its actuated position (80; II).

5. Actuation device (B) according to claim 3 or 4, **characterized in that** the lever (50), which is operatively connected to the first and second actuating elements (1, 2), has at least one Bowden cable driver (40A, 40B), wherein upon the an actuation of one of the actuating elements (1, 2) the lever (50) displaces the Bowden cable driver (40A, 40B) from the starting position (1; I, 2; I) into the actuation end position (1; II, 2; II), said lever being connected to one end of the at least one Bowden cable (60A, 60B) and whose other end is connected to the unlocking and/or adjustment mechanism of a vehicle seat (200).

6. Actuation device (B) according to claim 3 or 4, **characterized in that** the indicator element (80) is operatively connected to an indicator element lever (90), which is arranged rotatably on the axle (30) and is connected in a rotationally fixed manner to the lever (50) which can be rotated about the first pivot axle (Y1) on the axle (30).

7. Actuation device (B) according to claim 6, **characterized in that** the indicator element lever (90) has a lever arm disk (90-3), which forms a bearing element (90-2) which comprises a first bearing part (90-21) and a second bearing part (90-22), wherein the first bearing part (90-21) is mounted in a rotationally fixed manner on the lever (50) and the second bearing part (90-22) is rotatably mounted in the housing (20) of the actuation device (B) in bearing points respectively provided for this purpose.

8. Actuation device (B) according to claim 7, **characterized in that** the lever arm disk (90-3) carries an indicator element spring element (70C) which has a first end (70C-1) and a second end (70C-2), wherein the first end (70C-1) is supported in the indicator element (80) and the second end (70C-2) is supported on the housing (20) of the actuation device (B).

9. Actuation device (B) according to claim 7, **characterized in that** the lever arm (90-1) of the indicator element lever (90) on the lever arm disk (90-3) has an open end which rests on a contour (80C) of the indicator element 80, wherein the contour (80C) takes the form of a web, which forms a contoured contact surface on which the open end of the lever arm (90-1) rests, wherein the contact surface forms a first contour region (80C-1) and a second contour region (80C-1).

10. Actuation device (B) according to claims 7 to 9, **characterized in that**, upon the actuation of one of the actuating elements (1, 2) from the starting position (1; I, 2; I) into the actuation end position (1; II, 2; II), and a concomitant actuation of the lever (50), the lever arm (90-1) of the indicator element lever (90) is pivoted, whereby the first end (70C-1) of the preloaded spring element (70C) exerts a force on the indicator element (80), whereby a vertical translational movement of the indicator element 80 within the pocket (20-2) is effected, whereby the indicator element (80) comes from its unactuated retracted position (80; I) into the actuated extended position (80; II).

11. Actuation device (B) according to claim 10, **characterized in that** the indicator element (80) has an indicator element top (80A) and an indicator element base (80B), wherein the indicator element top (80A) and the indicator element base (80B) in the unactuated retracted position (80; I) are arranged below a top side of the housing (20) of the actuation device B, and the indicator element top (80A) is located in an opening (20-1) of the housing (20) such that it is visible from the outside, wherein, in the actuated extended position (80; II), the indicator element top (80A) (completely) and the indicator element base (80B) at least partially pass through the opening (20-1) so that the indicator element top (80A) and the indicator element base (80B) project from the housing (20) and are visible from the outside.

12. Vehicle seat (200) having an actuation device (B) according to at least one of claims 1 to 11.

## Revendications

1. Dispositif d'actionnement (B) pour le déverrouillage d'un mécanisme de déverrouillage et/ou de déplacement verrouillé d'un siège de véhicule (200), comprenant un premier et un deuxième élément d'actionnement (1, 2), le premier et le deuxième élément d'actionnement (1, 2) ainsi qu'un élément indicateur (80) étant disposés ensemble dans un boîtier (20) du dispositif d'actionnement (B), les éléments d'actionnement (1, 2) étant reliés à au moins un mécanisme d'actionnement (40A, 50, 60A ; 40B, 50, 60B) qui, lors de l'actionnement d'un des éléments d'actionnement (1, 2), assure toujours un déverrouillage du mécanisme de déverrouillage et/ou de déplacement verrouillé, l'actionnement d'un des éléments d'actionnement (1, 2) entraînant simultanément un actionnement et un affichage de l'élément indicateur (80) concernant l'état déverrouillé ou verrouillé du mécanisme de déverrouillage et/ou de déplacement.

2. Dispositif d'actionnement (B) selon la revendication 1, **caractérisé en ce que**, indépendamment l'un de l'autre, un actionnement du premier élément d'actionnement (1) ou un actionnement du deuxième élément d'actionnement (2) assure, via ledit au moins un mécanisme d'actionnement (40A, 50, 60A ; 40B, 60, 60B), le déverrouillage du mécanisme de déverrouillage et/ou de déplacement verrouillé.

3. Dispositif d'actionnement (B) selon la revendication 1 ou 2, **caractérisé en ce que** le premier élément d'actionnement (1), ensemble avec un levier (50) avec lequel il est en liaison active, est monté rotatif sur un axe (30) et le premier élément d'actionnement (1) peut être pivoté sur un axe de pivotement (Y1) formé par l'axe (30) à partir d'une position initiale (1 ; I) dans une position finale d'actionnement (1 ; II), moyennant quoi ledit au moins un mécanisme d'actionnement (40A, 50, 60A ; 40B, 50, 60B), lors d'un actionnement du premier élément d'actionnement (1) à partir d'une position initiale (1 ; I) non actionnée dans une position finale d'actionnement (1 ; II), assure le déverrouillage du mécanisme de déverrouillage et/ou de déplacement verrouillé d'un siège de véhicule (200) et transfère simultanément l'élément indicateur (80) à partir de sa position non actionnée (80 ; I) dans sa position actionnée (80 ; II).

4. Dispositif d'actionnement (B) selon la revendication 1 ou 2, **caractérisé en ce que** le deuxième élément d'actionnement (2) est en liaison active avec le levier (50), lequel est monté pivotant sur l'axe de pivotement (Y1) formé par l'axe (30), le deuxième élément d'actionnement (2) pouvant être déplacé à partir d'une position initiale (2 ; I) dans une position finale d'actionnement (2 ; II), moyennant quoi ledit au moins un mécanisme d'actionnement (40A, 50, 60A ; 40B, 50, 60B), lors d'un actionnement du deuxième élément d'actionnement (2) à partir d'une position initiale (2 ; I) non actionnée dans une position finale d'actionnement (2 ; II), assure le déverrouillage du mécanisme de déverrouillage et/ou de déplacement verrouillé d'un siège de véhicule (200) et transfère simultanément l'élément indicateur (80) à partir de sa position non actionnée (80 ; I) dans sa position actionnée (80 ; II).

5. Dispositif d'actionnement (B) selon la revendication 3 ou 4, **caractérisé en ce que** le levier (50) en liaison active avec le premier et le deuxième élément d'actionnement (1, 2) dispose d'au moins un entraîneur de câble Bowden (40A, 40B), le levier (50), lors de l'actionnement d'un des éléments d'actionnement (1, 2) à partir de la position initiale (1 ; I, 2 ; I) dans la position finale d'actionnement (1 ; II, 2 ; II), déplaçant l'entraîneur de câble Bowden (40A, 40B), lequel est relié à une extrémité dudit au moins un câble Bowden (60A, 60B) et qui est relié par son autre extrémité au mécanisme de déverrouillage et/ou de déplacement d'un siège de véhicule (200).

6. Dispositif d'actionnement (B) selon la revendication 3 ou 4, **caractérisé en ce que** l'élément indicateur (80) est en liaison active avec un levier d'élément indicateur (90), lequel est disposé rotatif sur l'axe (30) et relié de manière solidaire en rotation au levier (50) pouvant tourner sur l'axe (30) autour du premier axe de pivotement (Y1).

7. Dispositif d'actionnement (B) selon la revendication 6, **caractérisé en ce que** le levier d'élément indicateur (90) présente un disque de bras de levier (90-3), qui forme un élément de palier (90-2), lequel comprend une première partie de palier (90-21) et une deuxième partie de palier (90-22), la première partie de palier (90-21) étant montée de manière solidaire en rotation sur le levier (50) et la deuxième partie de palier (90-22) étant montée de manière rotative dans le boîtier (20) du dispositif d'actionnement (B), dans des positions de palier respectives prévues à cette fin.

8. Dispositif d'actionnement (B) selon la revendication 7, **caractérisé en ce que** le disque de bras de levier (90-3) porte un élément de ressort d'élément indicateur (70C), lequel présente une première extrémité (70C-1) et une deuxième extrémité (70C-2), la première extrémité (70C-1) s'appuyant dans l'élément indicateur (80) et la deuxième extrémité (70C-2) s'appuyant sur le boîtier (20) du dispositif d'actionnement (B).

9. Dispositif d'actionnement (B) selon la revendication 7, **caractérisé en ce que** le bras de levier (90-1) du levier d'élément indicateur (90) présente une extrémité ouverte au niveau du disque de bras de levier (90-3), laquelle est placée contre un contour (80C) de l'élément indicateur 80, le contour (80C) étant réalisé sous la forme d'un élément jointif, qui forme une surface de contact profilée, contre laquelle est placée l'extrémité ouverte du bras de levier (90-1), la surface de contact formant une première zone de contour (80C-1) et une deuxième zone de contour (80C-1).

10. Dispositif d'actionnement (B) selon les revendications 7 à 9, **caractérisé en ce que**, lors de l'actionnement d'un des éléments d'actionnement (1, 2) à partir de la position initiale (1 ; I, 2 ; I) dans la position finale d'actionnement (1 ; II, 2 ; II) et d'un actionnement du levier (50) qui l'accompagne, le bras de levier (90-1) du levier d'élément indicateur (90) est pivoté, moyennant quoi la première extrémité (70C-1) de l'élément de ressort (70C) précontraint exerce une force sur l'élément indicateur (80), moyennant quoi un mouvement de translation vertical de l'élément indicateur 80 est provoqué à l'intérieur de la poche (20-2), moyennant quoi l'élément indicateur (80) passe à partir de sa position rentrée (80 ; I) non actionnée dans la position sortie (80 ; II) actionnée.

11. Dispositif d'actionnement (B) selon la revendication 10, **caractérisé en ce que** l'élément indicateur (80) présente une partie supérieure de l'élément indicateur (80A) et une partie inférieure de l'élément indicateur (80B), la partie supérieure de l'élément indicateur (80A) et la partie inférieure de l'élément indicateur (80B) étant disposées, dans la position rentrée non actionnée (80 ; I), en dessous d'une face supérieure du boîtier (20) du dispositif d'actionnement B et la partie supérieure de l'élément indicateur (80A) se situant, en étant visible de l'extérieur, dans une ouverture (20-1) du boîtier (20), la partie supérieure de l'élément indicateur (80A) (entièrement) et la partie inférieure de l'élément indicateur (80B) traversant, dans la position sortie (80 ; II) actionnée, au moins partiellement l'ouverture (20-1), de telle sorte que la partie supérieure de l'élément indicateur (80A) et la partie inférieure de l'élément indicateur (80B) dépassent du boîtier (20) et sont visibles de l'extérieur.

12. Siège de véhicule (200) comprenant dispositif d'actionnement (B) selon au moins l'une quelconque des revendications 1 à 11.
